# EUROPEAN PATENT SPECIFICATION

(11) **EP 4 318 215 B1**
(45) Date of publication and mention of the grant of the patent: **05.08.2026**
(21) Application number: 22794507.8
(22) Date of filing: 01.04.2022
(51) Int. Cl.: G06F 8/65, G06F 3/04817

(54) **APPLICATION ICON UPDATE METHOD AND RELATED APPARATUS**
VERFAHREN ZUR AKTUALISIERUNG EINES ANWENDUNGSSYMBOLS UND ZUGEHÖRIGE VORRICHTUNG
PROCÉDÉ DE MISE À JOUR D'ICÔNE D'APPLICATION ET APPAREIL ASSOCIÉ

(30) Priority: 25.04.2021 CN 202110450398
(43) Date of publication of application: 07.02.2024
(73) Proprietor: Petal Cloud Technology Co., Ltd., Dongguan, Guangdong 523799 (CN)
(72) Inventor: ZHANG, Hongzhan, Shenzhen, Guangdong 518129 (CN); LIU, Jinxing, Shenzhen, Guangdong 518129 (CN)
(74) Representative: Maiwald GmbH
(86) International application number: PCT/CN2022/084851
(87) International publication number: WO 2022/228035

(56) References cited:
- CN-A- 104 978 185
- CN-A- 108 322 593
- CN-A- 109 144 619
- CN-A- 109 701 263
- CN-A- 109 725 923
- CN-A- 112 130 888
- JP-A- 2013 003 625
- US-B1- 10 755 321

## Description

### TECHNICAL FIELD

This application relates to the field of mobile terminal technologies, and in particular, to a method for updating an icon of an application and a related apparatus.

### BACKGROUND

An icon of an application (application, APP) in a mobile terminal, the same as an icon of software in a computer, is a mark of the application, for example, a camera, settings, a mailbox, an address book, or the like.

In many scenarios, for example, in a promotion activity scenario or an icon modification scenario, an application service provider or an application developer has a requirement for replacing an icon of an APP. In an existing implementation, an icon of an APP is updated by guiding a user to upgrade the application or reinstall the application. However, in this implementation, marketing and promotion costs of the application developer are increased, and a requirement of the application developer for flexible configuration cannot be met. The CN 104978185 A refers to an icon processing method and a device thereof. The CN 108322593 A refers to an application icon dynamic updating display method, a terminal and a computer readable storage medium.

In this case, how to update the icon of the application becomes an urgent technical problem to be resolved.

### SUMMARY

This application provides a method for updating an icon of an application and a related apparatus, to implement online replacement of the icon of the application. Therefore, implementation complexity for a developer is reduced, and costs are reduced. The invention is set out in the appended set of claims.

According to a first aspect, this application provides a method for updating an icon of an application. The application includes an icon update software development kit SDK. The method includes: The icon update SDK receives icon information sent by an application icon management platform. The icon update SDK calls, based on the icon information, an interface of an operating system of an electronic device in which the application is located, to set a desktop icon of the application on the electronic device as a target icon.

In the method of this application, online replacement of the icon is implemented by using platform configuration and an application integrated with an SDK. A developer does not need to guide a user to upgrade and reinstall the application. Therefore, implementation complexity for the developer can be reduced, and costs can be reduced.

With reference to the first aspect, in a first possible implementation, the icon information includes identification information of the target icon. That the icon update SDK calls, based on the icon information, an interface of an operating system of an electronic device, to set a desktop icon of the application on the electronic device as a target icon includes: When the electronic device does not store the target icon, the icon update SDK sends icon request information to the application icon management platform, where the icon request information is for requesting the target icon. The icon update SDK receives the target icon sent by the application icon management platform. The icon update SDK calls the interface to set the desktop icon as the target icon.

In this implementation, the icon update SDK sends the icon request information to the application icon management platform only when the electronic device does not store the target icon. However, when the electronic device stores the target icon, the icon update SDK does not request or download the target icon from the application icon management platform. This can reduce a quantity of interactions between the application icon management platform and the icon update SDK, and transmission losses of a file network for replacing the icon, and improve icon update efficiency of the application.

With reference to the first possible implementation, in a second possible implementation, that the icon update SDK sends icon request information to the application icon management platform includes: When the current desktop icon of the application on the electronic device is not the target icon, the icon update SDK sends the icon request information to the application icon management platform.

With reference to the first aspect, in a third possible implementation, the icon information includes the target icon.

With reference to the third possible implementation, in a fourth possible implementation, that the icon update SDK calls, based on the icon information, an interface of an operating system of an electronic device, to set a desktop icon of the application on the electronic device as a target icon includes: When the current desktop icon of the application on the electronic device is not the target icon, the icon update SDK calls the interface to set the desktop icon as the target icon.

With reference to any one of the first aspect or the first to the fourth possible implementations, in a fifth possible implementation, before the icon update SDK receives the icon information sent by the application icon management platform, the method further includes: The icon update SDK sends icon update request information to the application icon management platform, where the icon update request information is for requesting the target icon currently set by the application icon management platform for the application.

With reference to the fifth possible implementation, in a sixth possible implementation, the icon update SDK sends the icon update request information to the application icon management platform in a startup phase of the application.

With reference to the fifth possible implementation, in a seventh possible implementation, before the icon update SDK sends the icon update request information to the application icon management platform, the method further includes: The application receives icon update information sent by the application icon management platform, where the icon update information is for notifying that the icon of the application is updated.

According to a second aspect, this application provides a method for updating an icon of an application. The method includes: An application icon management platform sets the icon of the application as a target icon. The application icon management platform sends icon information to an icon update SDK of the application. The icon information is used by the icon update SDK to call an interface of an operating system of an electronic device in which the application is located, to set a desktop icon of the application on the electronic device as the target icon.

In the method of this application, online replacement of the icon is implemented by using platform configuration and an application integrated with an SDK. A developer does not need to guide a user to upgrade and reinstall the application. Therefore, implementation complexity for the developer can be reduced, and costs can be reduced.

With reference to the second aspect, in a first possible implementation, the icon information includes identification information of the target icon. The method further includes: The application icon management platform receives icon request information sent by the icon update SDK, where the icon request information is for requesting the target icon. The application icon management platform sends the target icon to the icon update SDK.

With reference to the first possible implementation, in a second possible implementation, the icon information includes the target icon.

With reference to the second aspect or the first or the second possible implementation, in a third possible implementation, before the application icon management platform sends the icon information to the icon update SDK of the application, the method further includes: The application icon management platform receives icon update request information sent by the icon update SDK, where the icon update request information is for requesting the target icon currently set by the application icon management platform for the application.

With reference to the third possible implementation, in a fourth possible implementation, before the application icon management platform receives the icon update request information sent by the icon update SDK, the method further includes: The application icon management platform sends icon update information to the application, where the icon update information is for notifying that the icon of the application is updated.

According to a third aspect, this application provides an application apparatus. The apparatus may include modules configured to perform the method in the first aspect. These modules may be implemented by using software and/or hardware.

According to a fourth aspect, this application provides an apparatus for managing an icon of an application. The apparatus may include modules configured to perform the method in the second aspect. These modules may be implemented by using software and/or hardware.

According to a fifth aspect, this application provides a computer-readable medium. The computer-readable medium stores program code to be executed by a device. The program code includes instructions for performing the method according to any one of the first aspect, the second aspect, or the possible implementations of the first aspect and the second aspect.

According to a sixth aspect, this application provides an apparatus for updating an icon of an application. The apparatus includes a memory and a processor. The memory is configured to store program instructions. The processor is configured to call the program instructions in the memory to perform the method according to any one of the first aspect, the second aspect, or the possible implementations of the first aspect and the second aspect.

According to a seventh aspect, this application provides a computer program product including instructions. When the computer program product runs on a computer, the computer is enabled to perform the method according to any one of the first aspect, the second aspect, or the possible implementations of the first aspect and the second aspect.

According to an eighth aspect, this application provides a chip. The chip includes at least one processor and a communication interface. The communication interface and the at least one processor are interconnected through a line. The at least one processor is configured to run a computer program or instructions, to perform the method according to any one of the first aspect, the second aspect, or the possible implementations of the first aspect and the second aspect.

According to a ninth aspect, this application provides a computing device. The computing device includes at least one processor and a communication interface. The communication interface and the at least one processor are interconnected through a line. The communication interface communicates with a target system. The at least one processor is configured to run a computer program or instructions, to perform the method according to any one of the first aspect, the second aspect, or the possible implementations of the first aspect and the second aspect.

### BRIEF DESCRIPTION OF DRAWINGS

FIG. 1 is a schematic diagram of a system architecture to which an embodiment of this application is applied;
FIG. 2 is a schematic diagram of a setting interface for setting an icon of an application on an application icon management platform according to an embodiment of this application;
FIG. 3 is another schematic diagram of a setting interface for setting an icon of application on an application icon management platform according to an embodiment of this application;
FIG. 4 is a schematic diagram of a structure of an electronic device according to an embodiment of this application;
FIG. 5 is a schematic diagram of a software structure of an electronic device according to an embodiment of this application;
FIG. 6 is a first schematic flowchart of a method for updating an icon of an application of an electronic device according to an embodiment of this application;
FIG. 7 is a second schematic flowchart of a method for updating an icon of an application of an electronic device according to an embodiment of this application;
FIG. 8 is a third schematic flowchart of a method for updating an icon of an application of an electronic device according to an embodiment of this application;
FIG. 9 is a fourth schematic flowchart of a method for updating an icon of an application of an electronic device according to an embodiment of this application;
FIG. 10 is a fifth schematic flowchart of a method for updating an icon of an application of an electronic device according to an embodiment of this application;
FIG. 11 is a schematic diagram of a structure of an application apparatus according to an embodiment of this application;
FIG. 12 is a schematic diagram of a structure of an apparatus for managing an icon of an application according to an embodiment of this application; and
FIG. 13 is a schematic diagram of a structure of an apparatus for updating an icon of an application according to an embodiment of this application.

### DESCRIPTION OF EMBODIMENTS

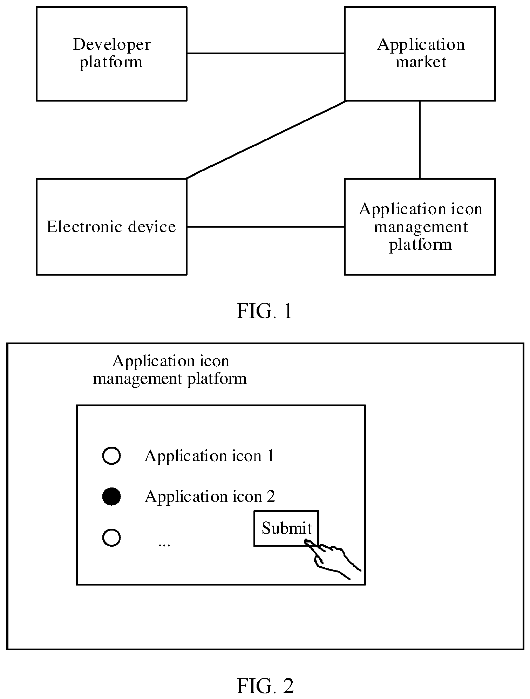

FIG. 1 is a schematic diagram of a system architecture to which an embodiment of this application is applied. As shown in FIG. 1, the system includes a developer platform, an application market, an electronic device, and an application icon management platform.

The developer platform is used by a developer to develop an application. The developer platform in this embodiment further provides an icon update software development kit (software development kit, SDK) for the developer. In this way, when using the developer platform to develop an application, the developer can reference the icon update SDK in an application project and integrate the icon update SDK into the application project. The icon update SDK is an SDK that can interact with the application icon management platform, obtain an icon of the application on the electronic device, and call a system interface of the electronic device to set the icon of the application.

After obtaining an application integrated with the icon update SDK by using the developer platform, the developer can release the application to the application market.

An operating system of the electronic device in this embodiment may include an Android (Android) system, an Apple operating system (iOS system), a Windows system, a Linux system, or the like.

The developer may set the icon of the application on the application icon management platform. FIG. 2 is a schematic diagram of a setting interface for setting an icon of an application on an application icon management platform according to an embodiment of this application. It may be understood that FIG. 2 is merely an example of an icon setting interface and an icon setting manner. Specific content of the icon setting interface and a specific implementation of icon setting of an application are not limited in this embodiment of this application.

As shown in FIG. 2, in an icon setting interface provided by the application icon management platform for the application, options of one or more alternative icons may be provided for a developer. After the developer selects a target icon of the application from these options, and clicks a submit button, the target icon of the application is recorded in the application icon management platform.

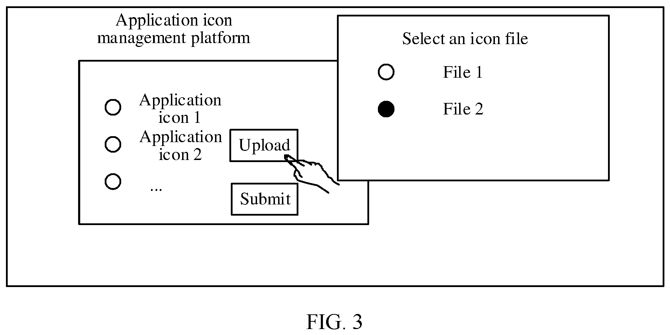

Optionally, as shown in FIG. 3, the application icon management platform may further provide a function of uploading another alternative icon for the developer, so that the developer can upload more alternative icons. This enriches choices of the developer. After clicking an "upload" button, a user may upload more icons to the application icon management platform.

Optionally, the application icon management platform may further provide a function of deleting an alternative icon for the developer, so that the developer can delete an unnecessary alternative icon. This saves a storage resource of the application icon management platform.

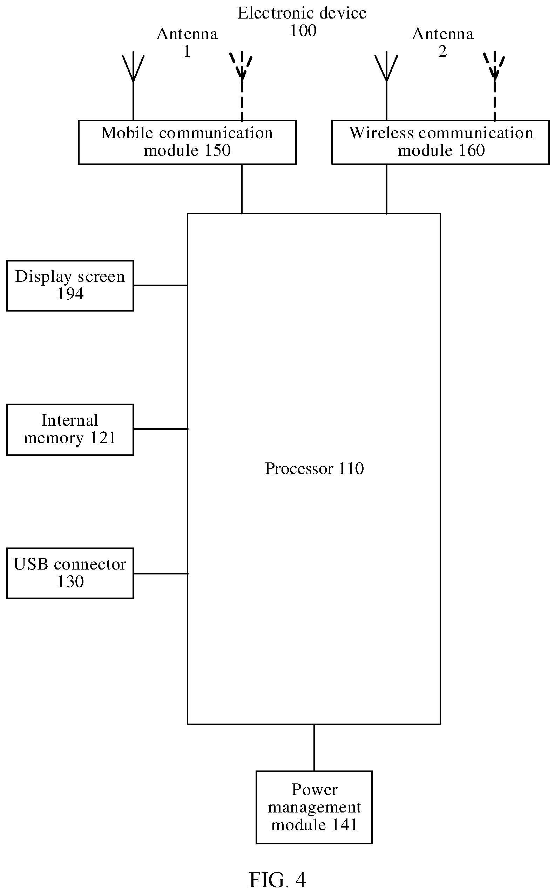

The electronic device may download, from the application market, the application integrated with the icon update SDK, and install the application. After installing the application, the electronic device interacts with the application icon management platform by using the icon update SDK in the application, to receive indication information of the target icon of the application from the application icon management platform, and call the system interface of the electronic device based on the indication information to set a desktop icon of the application as the target icon. An example of the electronic device in this embodiment is an electronic device shown in FIG. 4.

In this embodiment, because icon replacement of the application on the electronic device is implemented through interaction between the SDK integrated into the application and the application icon management platform, the developer only needs to update the target icon of the application in the application icon management platform when the icon of the application on the electronic device needs to be updated.

It can be learned that, compared with updating the icon of the application on the electronic device by updating the application or re-downloading and installing the application, the system in this embodiment can implement update or replacement of the icon of the application in the electronic device at a low cost, more flexibly, and more quickly.

In this embodiment, optionally, the application icon management platform and the developer platform may be a same platform, or the application icon management platform may be implemented by a device deployed on a network side.

When the application icon management platform and the developer platform are the same platform, costs of maintaining the icon of the application by the application developer can be further reduced.

In this embodiment, it is considered that different electronic devices have different system types, and different types of systems have different interfaces for setting the icon of the application. In some implementations, the developer platform may provide different icon update SDKs for applications running on electronic devices of different system types. Each icon update SDK calls an application icon setting interface in a corresponding system.

It is considered that different electronic devices have different system types, and different types of systems have different interfaces for displaying the icon of the application. In some other implementations, the developer platform may provide a same icon update SDK for applications running on electronic devices of different system types. The icon update SDK includes calling of application icon setting interfaces in these different types of systems. In this implementation, after determining the target icon of the application, the icon update SDK in the electronic device, the electronic device needs to call, based on a system type of the electronic device, an application icon setting interface corresponding to the system type.

Different system types correspond to different icon update SDKs, so that a quantity of code of the icon update SDK can be reduced. Therefore, a data transmission amount between the electronic device and the application market can be reduced, a transmission delay can be reduced, and the storage resource of the electronic device can be saved. In addition, complexity of the icon update SDK can be reduced. Therefore, efficiency of updating the icon of the application by the electronic device can be improved.

Different system types correspond to the same icon update SDK. Because an application system type of the application does not need to be differentiated, development difficulty can be reduced and development efficiency can be improved.

In this embodiment, it is considered that different electronic devices have different system versions, and different versions of systems have different interfaces for setting the icon of the application. In some implementations, the developer platform may provide different icon update SDKs for applications running on electronic devices of different system versions. Each icon update SDK calls an application icon setting interface of a corresponding version.

It is considered that different electronic devices of a same system type have different system versions, and different versions of systems have different interfaces for displaying the icon of the application. In some other implementations, the developer platform may provide a same icon update SDK for applications running on electronic devices of different system versions. The icon update SDK includes calling of application icon setting interfaces in these different types of versions. In this implementation, after determining the target icon of the application, the icon update SDK in the electronic device needs to call, based on a system version of the electronic device, an application icon setting interface corresponding to the system version.

Different system versions correspond to different icon update SDKs, so that a quantity of code of the icon update SDK can be reduced. Therefore, a data transmission amount between the electronic device and the application market can be reduced, a transmission delay can be reduced, and the storage resource of the electronic device can be saved. In addition, complexity of the icon update SDK can be reduced. Therefore, efficiency of updating the icon of the application by the electronic device can be improved.

Different system versions correspond to the same icon update SDK. Because an application system version of the application does not need to be differentiated, development difficulty can be reduced and development efficiency can be improved.

FIG. 4 is a schematic diagram of a structure of an electronic device according to an embodiment of this application. The electronic device 100 in this embodiment may include at least one of a mobile phone, a head unit, a foldable electronic device, a set-top box, a tablet computer, a desktop computer, a laptop computer, a handheld computer, a notebook computer, and an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device 100 is not specially limited in this embodiment of this application.

The electronic device 100 may include a processor 110, an internal memory 121, a USB connector 130, a power management module 141, an antenna 1, an antenna 2, a mobile communication module 150, a wireless communication module 160, a display screen 194, and the like.

It may be understood that, the structure shown in this embodiment of this application does not constitute specific limitation on the electronic device 100. In some other embodiments of this application, the electronic device 100 may include more or fewer components than those shown in the figure, some components may be combined, some components may be split, or a different component arrangement may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The processor may generate an operation control signal based on instruction operation code and a time sequence signal to complete control of instruction reading and instruction execution.

A memory may be further disposed in the processor 110, and is configured to store instructions and data. In some embodiments, the memory in the processor 110 may be a cache. The memory may store instructions or data that has been used or is frequently used by the processor 110. If the processor 110 needs to use the instructions or the data, the processor 110 may directly call the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as a touch sensor, an audio module, a wireless communication module, a display, and a camera through at least one of the foregoing interfaces.

It may be understood that, an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The USB connector 130 is an interface that complies with a USB standard specification, and may be configured to connect the electronic device 100 and a peripheral device. Specifically, the USB connector 130 may be a Mini USB connector, a Micro USB connector, a USB Type C connector, or the like. The USB connector 130 may be configured to connect to a charger, so that the charger charges the electronic device 100, or may be configured to connect to another electronic device to transmit data between the electronic device 100 and another electronic device. Alternatively, the USB connector 130 may be configured to connect to a headset, and output, through via the headset, audio stored in the electronic device. The connector may be further configured to connect to another electronic device, for example, a VR device. In some embodiments, the standard specification of the universal serial bus may be USB1.x, USB2.0, USB3.x, and USB4.

The power management module 141 is configured to connect a power supply to the processor 110. The power management module 141 receives an input of the power supply (for example, an internal battery or an external power supply), and supplies power to the processor 110, the internal memory 121, the display screen 194, the mobile communication module 150, the wireless communication module 160, and the like.

The power management module 141 may be further configured to monitor parameters such as a battery capacity, a battery cycle count, and a battery health status (electric leakage or impedance). In some other embodiments, the power management module 141 may alternatively be disposed in the processor 110.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G or the like. The mobile communication module 150 may include at least one filter, a switch, a power amplifier, a low noise amplifier (low noise amplifier, LNA), and the like.

The mobile communication module 150 may receive an electromagnetic wave via the antenna 1, perform processing such as filtering and amplification on the received electromagnetic wave, and transmit a processed electromagnetic wave to the modem processor for demodulation. The mobile communication module 150 may further amplify a signal modulated by the modem processor. The amplified signal is converted into an electromagnetic wave for radiation via the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium- and highfrequency signal. The demodulator is configured to demodulate a received electromagnetic wave signal into a low-frequency baseband signal. Then, the demodulator transmits the demodulated low-frequency baseband signal to the baseband processor for processing. After the low-frequency baseband signal is processed by the baseband processor, a processed low-frequency baseband signal is transmitted to the application processor. The application processor displays an image or a video via the display screen 194. In some embodiments, the modem processor may be an independent component. In some other embodiments, the modem processor may be independent of the processor 110, and is disposed in a same component as the mobile communication module 150 or another functional module.

The wireless communication module 160 may provide a solution applied to the electronic device 100 for wireless communication including a wireless local area network (wireless local area network, WLAN) (such as a wireless fidelity (wireless fidelity, Wi-Fi) network), Bluetooth (Bluetooth, BT), Bluetooth low energy (Bluetooth low energy, BLE), ultra-wideband (ultra-wideband, UWB), a global navigation satellite system (global navigation satellite system, GNSS), frequency modulation (frequency modulation, FM), near field communication (near field communication, NFC) technology, an infrared (IR) technology, and the like. The wireless communication module 160 may be one or more components integrating at least one communication processing module. The wireless communication module 160 receives an electromagnetic wave via the antenna 2, performs frequency modulation and filtering processing on an electromagnetic wave signal, and sends the processed signal to the processor 110. The wireless communication module 160 may further receive a to-be-sent signal from the processor 110, and perform frequency modulation and amplification on the signal. The amplified signal is converted into an electromagnetic for radiation via the antenna 2.

In some embodiments, in the electronic device 100, the antenna 1 is coupled to the mobile communication module 150, and the antenna 2 is coupled to the wireless communication module 160, so that the electronic device 100 can communicate with a network and another electronic device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function via the GPU, the display screen 194, the application processor, or the like. The GPU is a microprocessor for image processing, and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a micro light-emitting diode (micro light-emitting diode, Micro LED), a micro organic light-emitting diode (micro organic light-emitting diode, Micro OLED), a quantum dot light-emitting diode (quantum dot light-emitting diode, QLED), or the like. In some embodiments, the electronic device 100 may include one or more display screens 194.

The internal memory 121 may be configured to store computer executable program code. The executable program code includes instructions. The internal memory 121 may include a program storage area and a data storage area. The program storage area may store an operating system, an application needed by at least one function (such as a sound playing function or an image playing function), and the like. The data storage area may store data (for example, audio data or a phone book) created in a using process of the electronic device 100. In addition, the internal memory 121 may include a high-speed random access memory, and may further include a nonvolatile memory, for example, at least one magnetic disk storage component, a flash memory component, or a universal flash storage (universal flash storage, UFS). The processor 110 performs various function methods or data processing of the electronic device 100 by running the instructions stored in the internal memory 121 and/or the instructions stored in the memory disposed in the processor.

In an example, the processor 110 of the electronic device 100 in this embodiment may download, from an application market via the mobile communication module 150 and the antenna 1, via the wireless communication module 160 and the antenna 2, or via the USB connector 130, an application integrated with the icon update SDK, and call the icon update SDK in the application to interact with an application icon management platform via the mobile communication module 150 and the antenna 1, via the wireless communication module 160 and the antenna 2, or via the USB connector 130, to complete update or replacement of the icon of the application, and then display an updated icon of the application via the display screen.

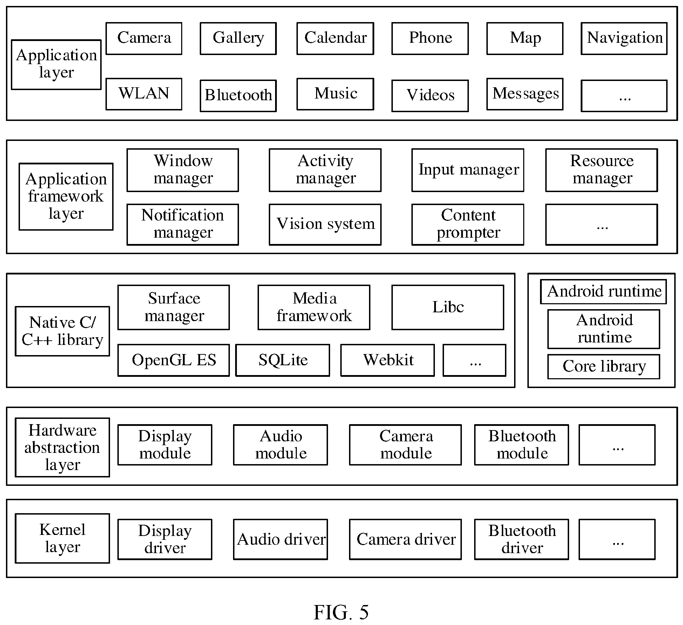

A software system of the electronic device 100 may use a layered architecture, an event-driven architecture, a microkernel architecture, a micro service architecture, or a cloud architecture. In this embodiment of this application, a system having a layered architecture is used as an example to describe a software structure of the electronic device 100 with reference to FIG. 5. For example, when the software system of the electronic device 100 is an Android system having a layered architecture, a schematic diagram of a structure of software of the electronic device 100 is shown in FIG. 5.

In a layered architecture, software is divided into several layers, and each layer has a clear role and responsibility. The layers communicate with each other through a software interface. In some embodiments, the Android system is divided into five layers from top to bottom: an application layer, an application framework layer, an Android runtime (Android runtime, ART) and native C/C++ library, a hardware abstract layer (hardware abstract layer, HAL), and a kernel layer.

The application layer may include a series of application packages. As shown in FIG. 5, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for the applications in the application layer. The application framework layer includes some predefined functions.

As shown in FIG. 5, the application framework layer may include a window manager, a content provider, a view system, a resource manager, a notification manager, an activity manager, an input manager, and the like.

The window manager provides a window manager service (window manager service, WMS). The WMS may be used for window management, window animation management, surface (surface) management, and may be used as a relay station of an input system.

The content provider is configured to store and obtain data and enable the data to be accessed by an application. The data may include a video, an image, audio, phone calls made and answered, a browsing history, a bookmark, a phone book, and the like.

The view system includes a visual control, for example, a control for displaying a text or a control for displaying a picture. The view system may be configured to construct an application. A display interface may include one or more views. For example, a display interface including a short message notification icon may include a view for displaying a text display view and an image display view.

The resource manager provides various resources, such as localized character strings, icons, pictures, layout files, video files, and the like, for the application.

The notification manager enables the application to display notification information in a status bar, and may be used to convey a notification message. The displayed notification may disappear automatically after a short pause without user interaction. For example, the notification manager is used for notifying download completion, a message notification, and the like. The notification manager may alternatively be a notification that appears in the status bar at the top of the system in the form of a chart or scroll bar text, for example, a notification of an application running in the background, or a notification that appear on the screen in the form of a dialog window. For example, text information is displayed in the status bar, a prompt tone is generated, the electronic device vibrates, or an indicator light blinks.

The activity manager may provide an activity manager service (activity manager service, AMS). The AMS may be used for startup, switching, and scheduling of a system component (for example, an activity, a service, a content provider, and a broadcast receiver) and management and scheduling of an application process.

The input manager may provide an input manager service (input manager service, IMS). The IMS may be used for managing system input, for example, touchscreen input, key input, and sensor input. The IMS obtains an event from an input device node and allocates the event to an appropriate window through interaction with the WMS.

The Android runtime includes a core library and the Android runtime. The Android runtime is responsible for converting source code to machine code. The Android runtime mainly uses an ahead-of-time (ahead or time, AOT) compiler technology and a just-in-time (just-in-time, JIT) compiler technology.

The core library is mainly used for providing functions of basic Java class libraries, such as a basic data structure, mathematics, I/O, a tool, a database, a network, and the like. The core library provides the API for a user to develop an Android application.

The native C/C++ library may include a plurality of functional modules, such as, a surface manager (surface manager), a media framework (media framework), libc, OpenGL ES, SQLite, Webkit, and the like.

The surface manager is configured to manage a display subsystem, and provide fusion of 2D and 3D layers for a plurality of applications. The media framework supports playback and recording in a plurality of commonly used audio and video formats, static image files, and the like. The media library may support a plurality of audio and video coding formats, for example, moving picture experts group (moving picture experts group, MPEG) 4, H.264, MP3, advanced audio coding (advanced audio coding, AAC), adaptive multi-rate (adaptive multi-rate, AMR), JPG, portable network graphics format (portable network graphics format, PNG), and the like. OpenGL ES provides drawing and manipulation of 2D graphics and 3D graphics in the application. SQLite provides a lightweight relational database for the application of the electronic device 100.

The hardware abstraction layer runs in user space (user space), encapsulates a driver of the kernel layer, and provides a calling interface for an upper layer. The hardware abstraction layer includes at least a display module, a camera module, an audio module, and a sensor module.

The kernel layer is a layer between hardware and software. The kernel layer includes at least a display driver, a camera driver, an audio driver, and a sensor driver.

In this embodiment, all layers below the application layer may be collectively referred to as a system layer. The system layer can download the application integrated with the icon update SDK from the application market and add the application to the application layer. Further, the system layer runs the icon update SDK in the application in the application layer. The icon update SDK interacts with the application icon management platform via the system layer, to determine a target icon of the application, and calls an interface at the system layer to update the icon of the application. The system layer displays the updated icon of the application.

In this embodiment of this application, a process in which the electronic device sets the icon of the application by using the icon update SDK may be referred to as an online replacement process of the icon of the application.

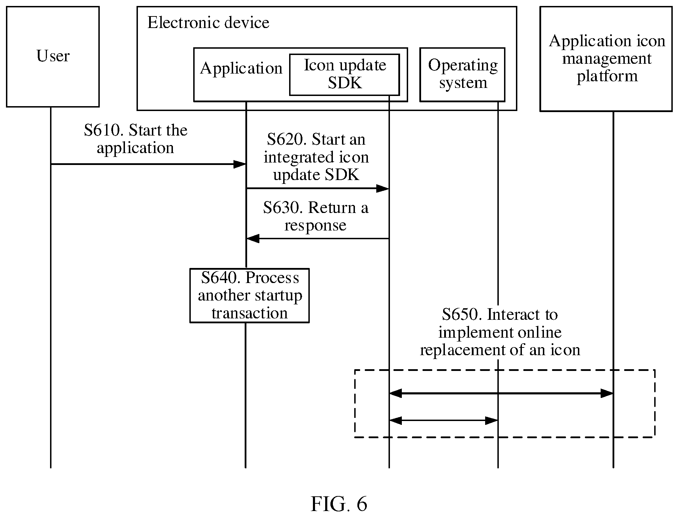

FIG. 6 is a schematic flowchart of a method for online replacing an icon of an application of an electronic device according to an embodiment of this application. As shown in FIG. 6, the method may include S610, S620, S630, S640, and S650.

S610. A user starts the application in the electronic device.

For example, the user clicks an icon on a desktop of the electronic device, to start an application corresponding to the icon.

S620. The application starts an integrated icon update SDK.

This step may also be understood as that a main thread of the application calls an icon update SDK integrated into the application.

S630. The icon update SDK returns a response to the application.

For example, the icon update SDK returns the response to the main thread of the application. In this embodiment, after being started, the icon update SDK directly returns the response to the application, to avoid blocking and affecting startup duration of the application. In this embodiment, after the icon update SDK is started and the response is directly returned to the application, a subsequently executed icon replacement operation is asynchronous with the main thread of the application, or is processed in parallel with the main thread of the application.

S640. The application processes another startup transaction.

For example, the main thread of the application performs related startup manipulation.

S650. The icon update SDK interacts with an application icon management platform and an operating system of the electronic device, to implement online replacement of the icon.

In this embodiment, after S650, the user returns to the desktop again for viewing, and may see that the icon of the application has been set as a target icon currently set by a developer for the application.

Optionally, in this application, users of the electronic device may be further grouped, different icons are separately configured for different users, and appropriate icons are selected for the different users.

This embodiment provides a solution for replacing the icon online for the developer of the application. Compared with a solution in which an application needs to be upgraded or reinstalled in a conventional technology, implementation complexity for the developer and costs can be reduced by using platform configuration and an application integrated with an SDK to implement online replacement of the icon.

In addition, in this embodiment, the application icon management platform directly sends the target icon to the icon update SDK. A quantity of interactions between the application icon management platform and the icon update SDK can be reduced, to improve icon update efficiency of the application.

In this embodiment, optionally, S640, S620, and S630 may also be performed asynchronously, or concurrently.

According to the invention, the application icon management platform may directly call an icon management interface in the operating system of the electronic device to set the icon of the application, or may call an icon management interface in the operating system via a desktop management program of the electronic device to set the icon of the application. Compared with the second implementation, the first implementation has higher efficiency, and can implement an icon update requirement of the application in a scenario in which the desktop management program of the electronic device does not open an interface of the desktop management program for calling.

S650 in this embodiment, to be specific, that the icon update SDK interacts with the application icon management platform to implement online replacement of the icon may be implemented in a plurality of implementations. The following describes several example implementations in which the icon update SDK interacts with the application icon management platform to implement online replacement of the icon.

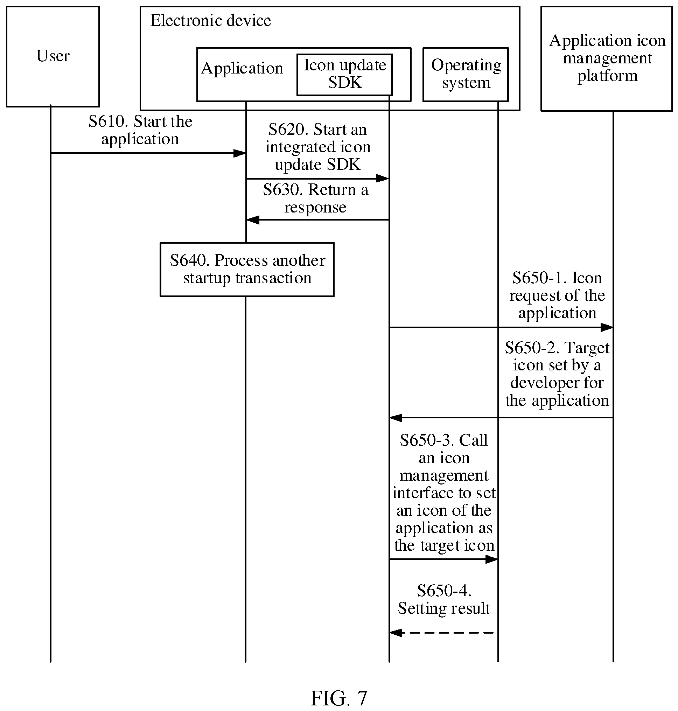

In a first implementation, S650 may include S650-1, S650-2, and S650-3 in FIG. 7. Optionally, S650-4 may further be included.

S650-1. The icon update SDK sends an icon request of the application to the application icon management platform. Correspondingly, the application icon management platform receives the icon request sent by the icon update SDK. Optionally, the icon request may carry identification information of the application, for example, a name of the application.

S650-2. The application icon management platform sends, to the icon update SDK, the target icon set by the developer for the application. Correspondingly, the icon update SDK receives the target icon.

After receiving the icon request, the application icon management platform sends, to the icon update SDK, the target icon set by the developer for the application. For an implementation in which the developer sets the target icon for the application, refer to the foregoing content. Details are not described herein again.

S650-3. The icon update SDK calls the icon management interface provided by the operating system of the electronic device, to set the icon of the application as the target icon.

In this application, icon update is implemented in a manner in which the SDK directly calls an underlying system interface, to resolve, in the conventional technology, a problem that a coverage range of the electronic device is affected by inconsistent launcher versions of vendors when the icon is updated by calling a desktop management program (launcher) interface.

An Android system is used as an example. The icon update SDK calls a "setComponentE-nabledSetting" interface in a "Package Manager" method, to set the icon of the application as the target icon.

An iOS system is used as an example. The icon update SDK calls a "UIAlternateApplicationI-cons" category in a "UIApplication" method, to set the icon of the application as the target icon.

S650-4. After setting the target icon for the application, the operating system of the electronic device returns a setting result to the icon update SDK. An example of the setting result is notifying the icon update SDK that the icon is successfully set.

In this implementation, optionally, after S650-2 and before S650-3, the icon update SDK may first determine whether the current icon of the application is consistent with the target icon. If the current icon is consistent with the target icon, S650-2 and subsequent steps are performed. If the current icon is inconsistent with the target icon, S650-2 and subsequent steps may be skipped, that is, the application does not need to update the current icon.

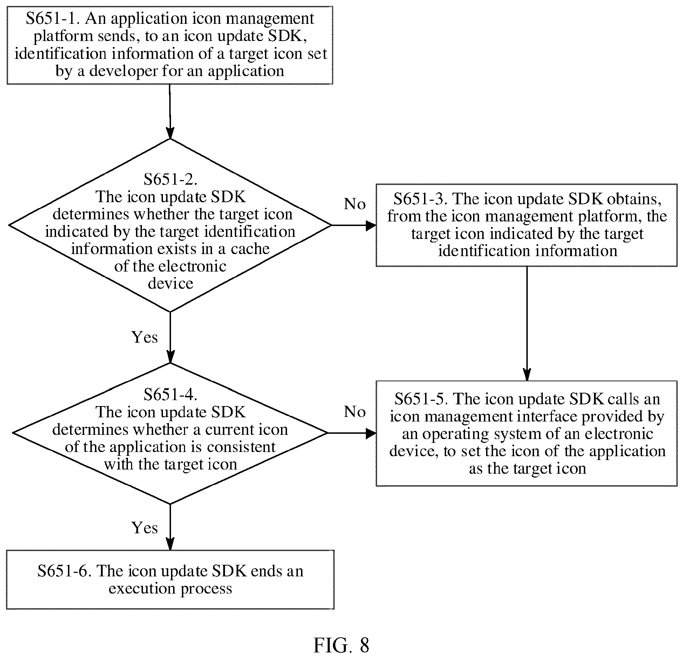

In a second implementation, S650 may include S651-1, S651-2, S651-3, S651-4, S651-5, and S651-6 in FIG. 8.

S651-1. The application icon management platform sends, to the icon update SDK, identification information of the target icon set by the developer for the application. Correspondingly, the icon update SDK receives the identification information sent by the application icon management platform.

After receiving the icon request, the application icon management platform may obtain the identification information of the target icon set by the developer for the application, and send the identification information of the target icon to the icon update SDK. This is referred to as sending target identification information for short.

S651-2. The icon update SDK determines whether the target icon indicated by the target identification information exists in a cache of the electronic device. If the target icon does not exist in the cache of the electronic device, S651-3 is performed. If the target icon exists in the cache of the electronic device, S651-4 is performed.

It may be understood that the cache of the electronic device may prestore one or more alternative icons and a mapping relationship between an alternative icon and an icon identifier for the application. For example, a mapping relationship between an icon previously used by the application and an icon identifier may be stored.

In this way, after receiving the target identification information from the application icon management platform, the icon update SDK may search, based on the mapping relationship, whether the target identification information and the target icon corresponding to the target identification information exist.

In an example, a hash value of an icon file may be calculated by using a secure hash algorithm (SHA). For example, a hash value of tan icon file is calculated by using an SHA256 (SHA256) algorithm, and the hash value is used as identification information of the icon.

An example of the alternative icon and the mapping relationship between the alternative icon and the icon identifier is shown in table 1. In table 1, the 1^{st} column is an icon number, and is an optional item. The 2^{nd} column is an icon name, and is an optional item. The 3^{rd} column is an icon type. The 4^{th} column is described in the following content. The last column is the SHA256 identification information of the icon. A maximum quantity of alternative icons in table 1 may be preset. For example, the maximum quantity of alternative icons may be configured via the application icon management platform.

The icon update SDK may determine, based on table 1, whether the cache of the electronic device includes the target icon corresponding to the target identification information.

**Table 1 Mapping table of icon-related information**

| | | | | |
|---|---|---|---|---|
| 1 | Pic1.png | /data/picture/ Pic1.png | No | 89198a... |
| 2 | Pic2.png | /data/picture/ Pic2.png | No | ada1a1... |
| 3 | Pic3.png | /data/picture/ Pic3.png | Yes | ada1a2... |
| 4 | Pic4.png | /data/picture/ Pic4.png | No | ada1a3... |
| 5 | Pic5.png | /data/picture/ Pic5.png | No | ada1a4... |

S651-3. The icon update SDK obtains, from the icon management platform, the target icon indicated by the target identification information.

For example, the icon update SDK sends a download request message to the icon management platform, to request to download the target icon. The download request message may carry the target identification information. After receiving the download request message, the icon management platform sends the target icon indicated by the target identification information to the icon update SDK. Correspondingly, the icon update SDK receives the target icon.

After receiving the target icon, the icon update SDK needs to store the target icon in the cache of the electronic device. If a quantity of alternative icons in the cache of the electronic device exceeds a maximum preset value, an earliest stored and currently unused icon is deleted, and the target icon is stored. If a quantity of alternative icons in the cache of the electronic device does not exceed a maximum preset value, the target icon is directly stored.

S651-4. The icon update SDK determines whether the current icon of the application is consistent with the target icon. If the current icon is inconsistent with the target icon, S651-5 is performed. If the current icon is consistent with the target icon, S651-6 is performed.

It may be understood that information indicating the current icon of the application may be recorded in the cache of the electronic device. For example, the 4^{th} column in table 1 indicates whether a corresponding icon is the current icon of the application. "Yes" indicates that the icon in a corresponding row is the current icon. "No" indicates that the icon in a corresponding row is not the current icon. The icon update SDK may determine, based on table 1, whether the target icon is the current icon.

S651-5. The icon update SDK calls the icon management interface provided by the operating system of the electronic device, to set the icon of the application as the target icon.

Alternatively, the icon update SDK calls the icon management interface provided by the operating system of the electronic device, to update the icon of the application to the target icon.

S651-6. The icon update SDK ends an execution process.

In this implementation, optionally, after setting the target icon for the application, the operating system of the electronic device returns a setting result to the icon update SDK. An example of the setting result is notifying the icon update SDK that the icon is successfully set. Further, the icon update SDK may return the setting result to the icon management platform, so that the icon management platform collects statistics on icon usage.

Although online icon replacement is implemented in the foregoing embodiments and the two implementations thereof, a passive update manner is used, and calling of the icon management platform is triggered by starting the application by the user. The two implementations cannot meet a scenario having a high real-time update requirement. Therefore, the following describes an implementation that can meet the real-time update requirement.

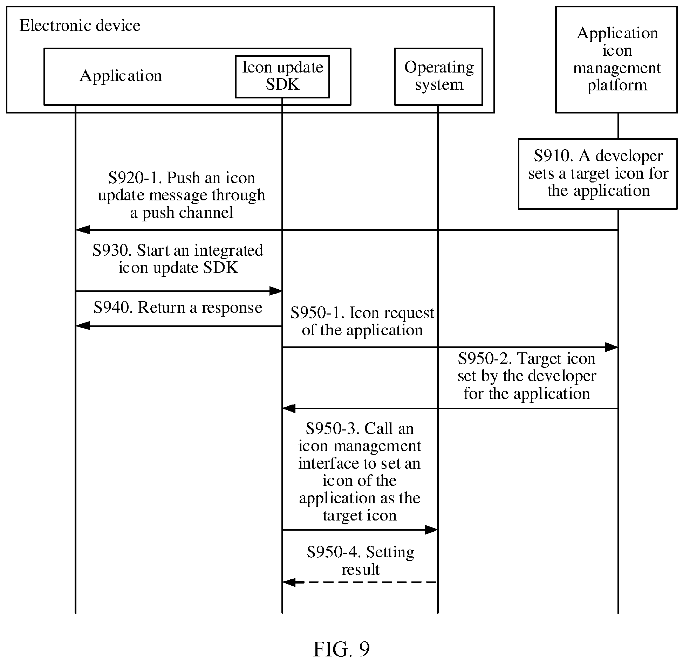

FIG. 9 is a schematic flowchart of a method for online replacing an icon of an application of an electronic device according to another embodiment of this application. As shown in FIG. 9, the method may include S910, S920-1, S930, S940, S950, S960-1, S960-2, S960-3, and S960-4.

S910. A developer sets a target icon for the application.

For an implementation in which the developer sets the target icon for the application, refer to the foregoing content. Details are not described herein again.

S920-1. An application icon management platform pushes an icon update message to the application through a push channel.

When the developer has set the target icon, in other words, after icon update is completed, the application icon management platform uses the push (Push) channel to implement downlink push of the icon update message on the application on an electronic device side. Correspondingly, the electronic device side receives the icon update message. After a user clicks the message, the application performs S930.

An example of the icon update message is notifying the application in the electronic device that an application icon of the application needs to be updated.

In this embodiment, the application icon management platform actively sends the icon update message to the electronic device side. This saves time for the electronic device to send an application icon request to the application icon management platform, and improves icon replacement efficiency.

S930. The application starts an integrated icon update SDK.

S940. The icon update SDK returns a response to the application.

S950-1. The icon update SDK sends an icon request of the application to the application icon management platform. Correspondingly, the application icon management platform receives the icon request sent by the icon update SDK.

S950-2. The application icon management platform sends, to the icon update SDK, the target icon set by the developer for the application. Correspondingly, the icon update SDK receives the target icon.

S950-3. The icon update SDK calls an icon management interface provided by an operating system of the electronic device, to set the icon of the application as the target icon.

S950-4. After setting the target icon for the application, the operating system of the electronic device returns a setting result to the icon update SDK.

In this embodiment, optionally, after S960-2 and before S960-3, the icon update SDK may first determine whether the current icon of the application is consistent with the target icon. If the current icon is consistent with the target icon, S960-2 and subsequent steps are performed. If the current icon is inconsistent with the target icon, S960-2 and subsequent steps may be skipped, that is, the application does not need to update the current icon.

In this embodiment, for S930, S940, S950-1, S950-2, S950-3, and S950-4, refer to S620, S630, S650-1, S650-2, S650-3, and S650-4. Details are not described herein again.

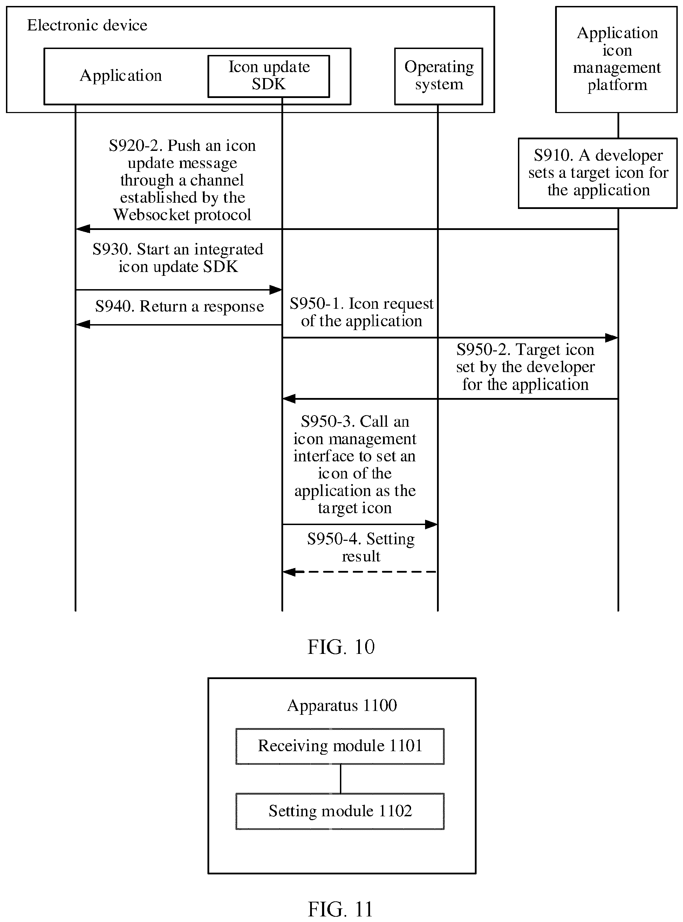

Same reference numerals in an embodiment shown in FIG. 10 and in the embodiment shown in FIG. 9 indicate same or similar meanings. Details are not described herein again. The following focuses on a difference between the embodiment shown in FIG. 10 and the embodiment shown in FIG. 9.

S920-2. An application icon management platform pushes an icon update message to an application through a channel established by the Websocket protocol.

In this embodiment, after a developer sets a target icon, if the application has started at this time, the application receives the icon update message actively pushed by the application icon management platform through the channel established by the Websocket protocol, and then starts an integrated icon update SDK.

In this embodiment, the icon update message is actively pushed to the application, so that icon update of the application is implemented without being sensed by a user. Therefore, icon update efficiency is improved, and a real-time problem is resolved.

It should be noted that, in the icon management platform, the developer may choose to use the push channel to push the icon update message to the application, or use the channel established by the Websocket protocol to push the icon update message to the application.

FIG. 11 is a schematic diagram of a structure of an application apparatus according to an embodiment of this application. The apparatus shown in FIG. 11 may be configured to perform any method in FIG. 6 to FIG. 10. As shown in FIG. 11, the application apparatus 1100 in this embodiment may include a receiving module 1101 and a setting module 1102.

For example, the receiving module 1101 may be configured to perform S650-2, S651-1, and S950-2. The setting module 1102 may be configured to perform S650-3, 651-5, and S950-3.

Optionally, the apparatus 1100 may further include a sending module, to implement a related function in any method in FIG. 6 to FIG. 10. For example, the sending module may be configured to implement a sending-related function in any method in FIG. 6 to FIG. 10.

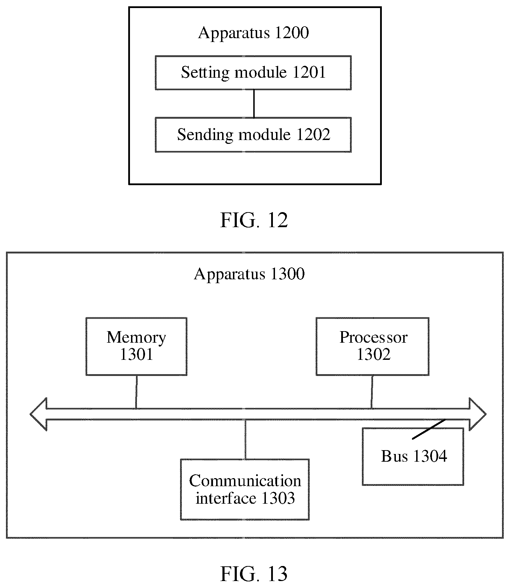

FIG. 12 is a schematic diagram of a structure of an apparatus for managing an icon of an application according to an embodiment of this application. The apparatus shown in FIG. 12 may be configured to perform any method in FIG. 6 to FIG. 10. As shown in FIG. 12, the application apparatus 1200 in this embodiment may include a setting module 1201, and a sending module 1202.

For example, the setting module 1201 may be configured to perform S910. The sending module 1202 may be configured to perform S650-2, S651-1, and S950-2.

Optionally, the apparatus 1200 may further include a receiving module, to implement a related function in any method in FIG. 6 to FIG. 10. For example, the receiving module may be configured to implement a receiving-related function in any method in FIG. 6 to FIG. 10.

FIG. 13 is a schematic diagram of a structure of an apparatus for updating an icon of an application according to another embodiment of this application. The apparatus shown in FIG. 13 may be configured to perform any method for updating an icon of an application described in the foregoing embodiments.

As shown in FIG. 13, the apparatus 1300 in this embodiment includes a memory 1301, a processor 1302, a communication interface 1303, and a bus 1304. The memory 1301, the processor 1302, and the communication interface 1303 communicate with each other through the bus 1304.

The memory 1301 may be a read-only memory (read-only memory, ROM), a static storage device, a dynamic storage device, or a random access memory (random access memory, RAM). The memory 1301 may store a program. When the program stored in the memory 1301 is executed by the processor 1302, the processor 1302 is configured to perform steps of any method in FIG. 6 to FIG. 10.

The processor 1302 may be a general-purpose central processing unit (central processing unit, CPU), a microprocessor, an application-specific integrated circuit (application-specific integrated circuit, ASIC), or one or more integrated circuits, and is configured to execute a related program, to implement the method for updating an icon of an application in the method embodiments of this application.

Alternatively, the processor 1302 may be an integrated circuit chip, and has a signal processing capability. In an implementation process, the steps of the method for updating an icon of an application in embodiments of this application may be completed through a hardware integrated logic circuit in the processor 1302 or instructions in a form of software.

The processor 1302 may be a general-purpose processor, a digital signal processor (digital signal processor, DSP), an application-specific integrated circuit (ASIC), a field programmable gate array (field programmable gate array, FPGA) or another programmable logical device, a discrete gate or transistor logic device, or a discrete hardware component. The processor 1302 may implement or perform the methods, steps, and logical block diagrams that are disclosed in embodiments of this application. The general-purpose processor may be a microprocessor, or the processor may be any conventional processor or the like.

The steps of the methods disclosed with reference to embodiments of this application may be directly executed and accomplished by using a hardware decoding processor, or may be executed and accomplished by using a combination of hardware in the decoding processor and a software module. The software module may be located in a mature storage medium in the conventional technology, such as a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor 1302, functions that need to be executed by units included in the apparatus for updating an icon of an application in this application. For example, the processor 1302 may perform the steps/functions in any embodiment shown in FIG. 6 to FIG. 10.

To implement communication between the apparatus 1300 and another device or a communication network, the communication interface 1303 may use a transceiver apparatus of a transceiver type. This is not limited thereto.

The bus 1304 may include a path that transmits information in each component of the apparatus 1300 (for example, the memory 1301, the processor 1302, and the communication interface 1303).

It should be understood that the apparatus 1300 shown in this embodiment of this application may be an electronic device, or may be a chip configured in an electronic device.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. By way of example, but not limitation, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions or computer programs. When the computer instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, DVD), a semiconductor medium, or the like. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification generally represents an "or" relationship between the associated objects, but may also represent an "and/or" relationship. For details, refer to the context for understanding.

In this application, "at least one" means one or more, and "a plurality of" means two or more. "At least one of the following items (pieces)" or similar expressions means any combination of these items, including any combination of singular item (piece) or plural items (pieces). For example, at least one of items (pieces) in a, b, or c may represent a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, the units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functional units are implemented in a form of a software functional unit and sold or used as an independent product, the functional units may be stored in a computer-readable storage medium. Based on such an understanding, the technical solutions of this application essentially, or the part contributing to the conventional technology, or some of the technical solutions may be implemented in the form of the software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory, a random access memory, a magnetic disk, or an optical disc.

## Claims

1. A method for updating an icon of an application, wherein the application comprises an icon update software development kit SDK, and the method comprises:
starting, by the application, the icon update SDK,
returning, by icon update SDK, a response the application to avoid blocking and affecting startup duration of the application,
receiving, by the icon update SDK, icon information sent by an application icon management platform; and
calling, by the icon update SDK based on the icon information, an interface of an operating system of an electronic device (100) in which the application is located, to set a desktop icon of the application on the electronic device (100) as a target icon,
wherein the icon information comprises identification information of the target icon; and
the calling, by the icon update SDK based on the icon information, an interface of an operating system of an electronic device (100), to set a desktop icon of the application on the electronic device (100) as a target icon comprises:
when the electronic device (100) does not store the target icon, sending, by the icon update SDK, icon request information to the application icon management platform, wherein the icon request information is for requesting the target icon;
receiving, by the icon update SDK, the target icon sent by the application icon management platform; and
calling, by the icon update SDK, the interface, to set the desktop icon as the target icon.

2. The method according to claim 1, wherein the sending, by the icon update SDK, icon request information to the application icon management platform comprises:
when the current desktop icon of the application on the electronic device (100) is not the target icon, sending, by the icon update SDK, the icon request information to the application icon management platform.

3. The method according to claim 1, wherein the icon information comprises the target icon.

4. The method according to claim 3, wherein the calling, by the icon update SDK based on the icon information, an interface of an operating system of an electronic device (100), to set a desktop icon of the application on the electronic device (100) as a target icon comprises:
when the current desktop icon of the application on the electronic device (100) is not the target icon, calling, by the icon update SDK, the interface, to set the desktop icon as the target icon.

5. The method according to any one of claims 1 to 4, wherein before the receiving, by the icon update SDK, icon information sent by an application icon management platform, the method further comprises:
sending, by the icon update SDK, icon update request information to the application icon management platform, wherein the icon update request information is for requesting the target icon currently set by the application icon management platform for the application.

6. The method according to claim 5, wherein the icon update SDK sends the icon update request information to the application icon management platform in a startup phase of the application.

7. The method according to claim 5, wherein before the sending, by the icon update SDK, icon update request information to the application icon management platform, the method further comprises:
receiving, by the application, icon update information sent by the application icon management platform, wherein the icon update information is for notifying that the icon of the application is updated.

8. A method for updating an icon of an application, comprising:
setting, by an application icon management platform, the icon of the application as a target icon; and
sending, by the application icon management platform, icon information to an icon update SDK of the application, wherein the icon information is used by the icon update SDK to call an interface of an operating system of an electronic device (100) in which the application is located, to set a desktop icon of the application on the electronic device (100) as the target icon,
wherein the icon information comprises identification information of the target icon, and the method further comprises:
receiving, by the application icon management platform, icon request information sent by the icon update SDK, wherein the icon request information is for requesting the target icon; and
sending, by the application icon management platform, the target icon to the icon update SDK.

9. The method according to claim 8, wherein the icon information comprises the target icon.

10. The method according to any one of claims 8 to 9, wherein before the sending, by the application icon management platform, icon information to an icon update SDK of the application, the method further comprises:
receiving, by the application icon management platform, icon update request information sent by the icon update SDK, wherein the icon update request information is for requesting the target icon currently set by the application icon management platform for the application.

11. The method according to claim 10, wherein before the receiving, by the application icon management platform, icon update request information sent by the icon update SDK, the method further comprises:
sending, by the application icon management platform, icon update information to the application, wherein the icon update information is for notifying that the icon of the application is updated.

12. A computer-readable medium, wherein the computer-readable medium stores program code used by a computer for execution, and the program code comprises instructions for performing the method according to any one of claims 1 to 11.

13. An apparatus (1300) for updating an icon of an application, comprising a memory (1301) and a processor (1302), wherein
the memory (1301) is configured to store program instructions; and
the processor (1302) is configured to call the program instructions in the memory to perform the method according to any one of claims 1 to 11.

## Patentansprüche

1. Verfahren zum Aktualisieren eines Symbols einer Anwendung, wobei die Anwendung ein Software-Entwicklungskit, SDK, zur Symbolaktualisierung umfasst und das Verfahren Folgendes umfasst:
Starten, durch die Anwendung, des Symbolaktualisierungs-SDK,
Zurückgeben, durch Symbolaktualisierungs-SDK, einer Antwort die Anwendung, um Blockieren und Beeinträchtigen einer Startdauer der Anwendung zu vermeiden,
Empfangen, durch das Symbolaktualisierungs-SDK, von Symbolinformationen, die durch eine Anwendungssymbolverwaltungsplattform gesendet werden; und
Aufrufen, durch das Symbolaktualisierungs-SDK basierend auf den Symbolinformationen, einer Schnittstelle eines Betriebssystems einer elektronischen Einrichtung (100), auf der sich die Anwendung befindet, um ein Desktopsymbol der Anwendung auf der elektronischen Einrichtung (100) als ein Zielsymbol festzulegen,
wobei die Symbolinformationen Identifikationsinformationen des Zielsymbols umfassen; und
das Aufrufen, durch das Symbolaktualisierungs-SDK basierend auf den Symbolinformationen, einer Schnittstelle eines Betriebssystems einer elektronischen Einrichtung (100), um ein Desktopsymbol der Anwendung auf der elektronischen Einrichtung (100) als ein Zielsymbol festzulegen, Folgendes umfasst:
wenn die elektronische Einrichtung (100) das Zielsymbol nicht speichert, Senden, durch das Symbolaktualisierungs-SDK, von Symbolanforderungsinformationen an die Anwendungssymbolverwaltungsplattform, wobei die Symbolanforderungsinformationen zum Anfordern des Zielsymbols dienen;
Empfangen, durch das Symbolaktualisierungs-SDK, des Zielsymbols, das durch die Anwendungssymbolverwaltungsplattform gesendet wird; und
Aufrufen, durch das Symbolaktualisierungs-SDK, der Schnittstelle, um das Desktop-Symbol als das Zielsymbol festzulegen.

2. Verfahren nach Anspruch 1, wobei das Senden, durch das Symbolaktualisierungs-SDK, von Symbolanforderungsinformationen an die Anwendungssymbolverwaltungsplattform Folgendes umfasst:
wenn das aktuelle Desktop-Symbol der Anwendung auf der elektronischen Einrichtung (100) nicht das Zielsymbol ist, Senden, durch das Symbolaktualisierungs-SDK, von Symbolanforderungsinformationen an die Anwendungssymbolverwaltungsplattform.

3. Verfahren nach Anspruch 1, wobei die Symbolinformationen das Zielsymbol umfassen.

4. Verfahren nach Anspruch 3, wobei das Aufrufen, durch das Symbolaktualisierungs-SDK basierend auf den Symbolinformationen, einer Schnittstelle eines Betriebssystems einer elektronischen Einrichtung (100), um ein Desktopsymbol der Anwendung auf der elektronischen Einrichtung (100) als ein Zielsymbol festzulegen, Folgendes umfasst:
wenn das aktuelle Desktop-Symbol der Anwendung auf der elektronischen Einrichtung (100) nicht das Zielsymbol ist, Aufrufen, durch das Symbolaktualisierungs-SDK, der Schnittstelle, um das Desktop-Symbol als das Zielsymbol festzulegen.

5. Verfahren nach einem der Ansprüche 1 bis 4, wobei das Verfahren vor dem Empfangen, durch das Symbolaktualisierungs-SDK, von Symbolinformationen, die durch eine Anwendungssymbolverwaltungsplattform gesendet werden, ferner Folgendes umfasst:
Senden, durch das Symbolaktualisierungs-SDK, von Symbolaktualisierungsanforderungsinformationen an die Anwendungssymbolverwaltungsplattform, wobei die Symbolaktualisierungsanforderungsinformationen zum Anfordern des Zielsymbols, das aktuell durch die Anwendungssymbolverwaltungsplattform für die Anwendung festgelegt wird, dienen.

6. Verfahren nach Anspruch 5, wobei das Symbolaktualisierungs-SDK die Symbolaktualisierungsanforderungsinformationen in einer Startphase der Anwendung an die Anwendungssymbolverwaltungsplattform sendet.

7. Verfahren nach Anspruch 5, wobei das Verfahren vor dem Senden, durch das Symbolaktualisierungs-SDK, von Symbolaktualisierungsanforderungsinformationen an die Anwendungssymbolverwaltungsplattform ferner Folgendes umfasst:
Empfangen, durch die Anwendung, von Symbolaktualisierungsinformationen, die durch die Anwendungssymbolverwaltungsplattform gesendet werden, wobei die Symbolaktualisierungsinformationen zum Mitteilen, dass das Symbol der Anwendung aktualisiert worden ist, dienen.

8. Verfahren zum Aktualisieren eines Symbols einer Anwendung, umfassend:
Festlegen, durch eine Anwendungssymbolverwaltungsplattform, des Symbols der Anwendung als ein Zielsymbol; und
Senden, durch die Anwendungssymbolverwaltungsplattform, von Symbolinformationen an ein Symbolaktualisierungs-SDK der Anwendung, wobei die Symbolinformationen durch das Symbolaktualisierungs-SDK dazu verwendet werden, eine Schnittstelle eines Betriebssystems einer elektronischen Einrichtung (100), auf der sich die Anwendung befindet, aufzurufen, um ein Desktop-Symbol der Anwendung auf der elektronischen Einrichtung (100) als das Zielsymbol festzulegen,
wobei die Symbolinformationen Identifikationsinformationen des Zielsymbols umfassen und das Verfahren ferner Folgendes umfasst:
Empfangen, durch die Anwendungssymbolverwaltungsplattform, von Symbolanforderungsinformationen, die durch das Symbolaktualisierungs-SDK gesendet werden, wobei die Symbolanforderungsinformationen zum Anfordern des Zielsymbols dienen; und
Senden, durch die Anwendungssymbolverwaltungsplattform, des Zielsymbols an das Symbolaktualisierungs-SDK.

9. Verfahren nach Anspruch 8, wobei die Symbolinformationen das Zielsymbol umfassen.

10. Verfahren nach einem der Ansprüche 8 oder 9, wobei das Verfahren vor dem Senden, durch die Anwendungssymbolverwaltungsplattform, von Symbolinformationen an ein Symbolaktualisierungs-SDK der Anwendung ferner Folgendes umfasst:
Senden, durch die Anwendungssymbolverwaltungsplattform, von Symbolaktualisierungsanforderungsinformationen, die durch das Symbolaktualisierungs-SDK gesendet werden, wobei die Symbolaktualisierungsanforderungsinformationen zum Anfordern des Zielsymbols, das aktuell durch die Anwendungssymbolverwaltungsplattform für die Anwendung festgelegt wird, dienen.

11. Verfahren nach Anspruch 10, wobei das Verfahren vor dem Empfangen, durch die Anwendungssymbolverwaltungsplattform, von Symbolaktualisierungsanforderungsinformationen, die durch das Symbolaktualisierungs-SDK gesendet werden, ferner Folgendes umfasst:
Senden, durch die Anwendungssymbolverwaltungsplattform, von Symbolaktualisierungsinformationen an die Anwendung, wobei die Symbolaktualisierungsinformationen zum Mitteilen, dass das Symbol der Anwendung aktualisiert worden ist, dienen.

12. Computerlesbares Medium, wobei das computerlesbare Medium einen Programmcode speichert, der durch einen Computer zur Ausführung verwendet wird, und der Programmcode Anweisungen zum Durchführen des Verfahrens nach einem der Ansprüche 1 bis 11 umfasst.

13. Vorrichtung (1300) zum Aktualisieren eines Symbols einer Anwendung, umfassend einen Speicher (1301) und einen Prozessor (1302), wobei
der Speicher (1301) dazu konfiguriert ist, Programmanweisungen zu speichern; und
der Prozessor (1302) dazu konfiguriert ist, die Programmanweisungen in dem Speicher aufzurufen, um das Verfahren nach einem der Ansprüche 1 bis 11 durchzuführen.

## Revendications

1. Procédé de mise à jour d'une icône d'une application, dans lequel l'application comprend un kit de développement logiciel SDK de mise à jour d'icône, et le procédé comprend :
le démarrage, par l'application, du SDK de mise à jour d'icône,
le renvoi, par le SDK de mise à jour d'icône, d'une réponse à l'application pour éviter de bloquer et d'affecter la durée de démarrage de l'application,
la réception, par le SDK de mise à jour d'icône, d'informations d'icône envoyées par une plateforme de gestion d'icône d'application ; et
l'appel, par le SDK de mise à jour d'icône sur la base des informations d'icône, d'une interface d'un système d'exploitation d'un dispositif électronique (100) dans lequel l'application est située, pour définir une icône de bureau de l'application sur le dispositif électronique (100) comme icône cible,
dans lequel les informations d'icône comprennent des informations d'identification de l'icône cible ; et
l'appel, par le SDK de mise à jour d'icône sur la base des informations d'icône, d'une interface d'un système d'exploitation d'un dispositif électronique (100), pour définir une icône de bureau de l'application sur le dispositif électronique (100) comme icône cible comprend :
lorsque le dispositif électronique (100) ne stocke pas l'icône cible, l'envoi, par le SDK de mise à jour d'icône, d'informations de demande d'icône à la plateforme de gestion d'icône d'application, dans lequel les informations de demande d'icône servent à demander l'icône cible ;
la réception, par le SDK de mise à jour d'icône, de l'icône cible envoyée par la plateforme de gestion d'icône d'application ; et
l'appel, par le SDK de mise à jour d'icône, de l'interface, pour définir l'icône de bureau comme icône cible.

2. Procédé selon la revendication 1, dans lequel l'envoi, par le SDK de mise à jour d'icône, d'informations de demande d'icône à la plateforme de gestion d'icône d'application comprend :
lorsque l'icône de bureau actuelle de l'application sur le dispositif électronique (100) n'est pas l'icône cible, l'envoi, par le SDK de mise à jour d'icône, des informations de demande d'icône à la plateforme de gestion d'icône d'application.

3. Procédé selon la revendication 1, dans lequel les informations d'icône comprennent l'icône cible.

4. Procédé selon la revendication 3, dans lequel l'appel, par le SDK de mise à jour d'icône sur la base des informations d'icône, d'une interface d'un système d'exploitation d'un dispositif électronique (100), pour définir une icône de bureau de l'application sur le dispositif électronique (100) comme icône cible comprend :
lorsque l'icône de bureau actuelle de l'application sur dispositif électronique (100) n'est pas l'icône cible, l'appel, par le SDK de mise à jour d'icône, de l'interface, pour définir l'icône de bureau comme icône cible.

5. Procédé selon l'une quelconque des revendications 1 à 4, dans lequel avant la réception, par le SDK de mise à jour d'icône, d'informations d'icône envoyées par une plateforme de gestion d'icône d'application, le procédé comprend en outre :
l'envoi, par le SDK de mise à jour d'icône, d'informations de demande de mise à jour d'icône à la plateforme de gestion d'icône d'application, dans lequel les informations de demande de mise à jour d'icône servent à demander l'icône cible actuellement définie par la plateforme de gestion d'icône d'application pour l'application.

6. Procédé selon la revendication 5, dans lequel le SDK de mise à jour d'icône envoie les informations de demande de mise à jour d'icône à la plateforme de gestion d'icône d'application lors d'une phase de démarrage de l'application.

7. Procédé selon la revendication 5, dans lequel avant l'envoi, par le SDK de mise à jour d'icône, d'informations de demande de mise à jour d'icône à la plateforme de gestion d'icône d'application, le procédé comprend en outre :
la réception, par l'application, d'informations de mise à jour d'icône envoyées par la plateforme de gestion d'icône d'application, dans lequel les informations de mise à jour d'icône servent à notifier que l'icône de l'application est mise à jour.

8. Procédé de mise à jour d'une icône d'une application, comprenant :
la définition, par une plateforme de gestion d'icône d'application, de l'icône de l'application comme icône cible ; et
l'envoi, par la plateforme de gestion d'icône d'application, d'informations d'icône à un SDK de mise à jour d'icône de l'application, dans lequel les informations d'icône sont utilisées par le SDK de mise à jour d'icône pour appeler une interface d'un système d'exploitation d'un dispositif électronique (100) dans lequel l'application est située, pour définir une icône de bureau de l'application sur le dispositif électronique (100) comme icône cible,
dans lequel les informations d'icône comprennent des informations d'identification de l'icône cible, et le procédé comprend en outre :
la réception, par la plateforme de gestion d'icône d'application, d'informations de demande d'icône envoyées par le SDK de mise à jour d'icône, dans lequel les informations de demande d'icône servent à demander l'icône cible ; et
l'envoi, par la plateforme de gestion d'icône d'application, de l'icône cible au SDK de mise à jour d'icône.

9. Procédé selon la revendication 8, dans lequel les informations d'icône comprennent l'icône cible.

10. Procédé selon l'une quelconque des revendications 8 et 9, dans lequel avant l'envoi, par la plateforme de gestion d'icône d'application, d'informations d'icône à un SDK de mise à jour d'icône de l'application, le procédé comprend en outre :
la réception, par la plateforme de gestion d'icône d'application, d'informations de demande de mise à jour d'icône envoyées par le SDK de mise à jour d'icône, dans lequel les informations de demande de mise à jour d'icône servent à demander l'icône cible actuellement définie par la plateforme de gestion d'icône d'application pour l'application.

11. Procédé selon la revendication 10, dans lequel avant la réception, par la plateforme de gestion d'icône d'application, d'informations de demande de mise à jour d'icône envoyées par le SDK de mise à jour d'icône, le procédé comprend en outre :
l'envoi, par la plateforme de gestion d'icône d'application, d'informations de mise à jour d'icône à l'application, dans lequel les informations de mise à jour d'icône servent à notifier que l'icône de l'application est mise à jour.

12. Support lisible par ordinateur, dans lequel le support lisible par ordinateur stocke un code de programme utilisé par un ordinateur pour exécution, et le code de programme comprend des instructions destinées à réaliser le procédé selon l'une quelconque des revendications 1 à 11.

13. Appareil (1300) de mise à jour d'une icône d'une application, comprenant une mémoire (1301) et un processeur (1302), dans lequel la mémoire (1301) est configurée pour stocker des instructions de programme ; et
le processeur (1302) est configuré pour appeler les instructions de programme dans la mémoire pour réaliser le procédé selon l'une quelconque des revendications 1 à 11.
